(19) Europäisches Patentamt
European Patent Office
Office européen des brevets

(11) EP 4 527 858 A1

(12) EUROPEAN PATENT APPLICATION

(43) Date of publication:
**26.03.2025 Bulletin 2025/13**

(21) Application number: **23199352.8**

(22) Date of filing: **25.09.2023**

(51) International Patent Classification (IPC):
***C08B 3/02*** (2006.01) ***C08B 3/10*** (2006.01)
***C08L 1/10*** (2006.01)

(52) Cooperative Patent Classification (CPC):
**C08L 1/10; C08B 3/02; C08B 3/10**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Foundation Of Soongsil University-Industry Cooperation
Seoul 06978 (KR)**

(72) Inventors:
- **CHUNG, Jae Woo
07537 Seoul (KR)**
- **KANG, Hee Cheol
07040 Seoul (KR)**
- **CHANG, Yong Jun
14552 Gyeonggi-do (KR)**
- **LEE, Jae Woo
24267 Gangwon-do (KR)**

(74) Representative: **AWA Sweden AB
Box 45086
104 30 Stockholm (SE)**

# (54) HIGH-PURITY MANUFACTURING METHOD OF NANOCELLULOSE WITH ULTRA-HIGHLY GRAFTED BIOPOLYMER

(57) The present invention provides a high-purity glucose-based compound ultra-highly substituted with a biopolymer, in which a surface of a glucose-based compound as a natural material is ultra-highly modified with a biopolymer to improve compatibility and dispersibility with biodegradable polymers, thereby significantly improving the mechanical properties of the biodegradable polymer composite.

[Figure 1]

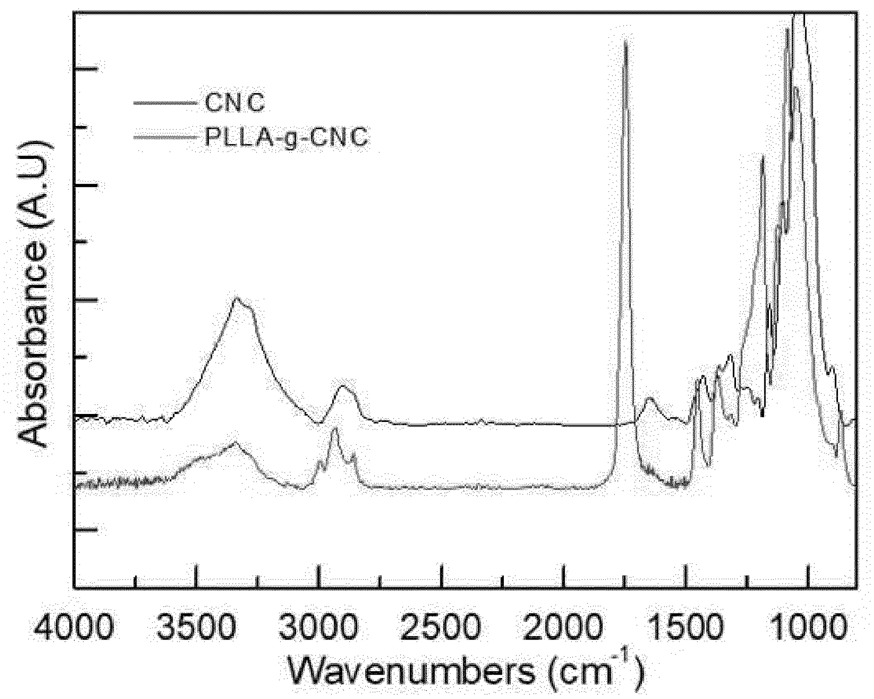


EP 4 527 858 A1

## Description

### [Technical Field]

The present invention relates to a high-purity manufacturing method of nanocellulose grafted with a high-purity biopolymer at an ultra-high level, and more specifically, to a high-purity manufacturing method of nanocellulose ultra-highly grafted with biopolymers, in which a surface of a glucose-based compound as a natural material is ultra-highly modified with a biopolymer to improve compatibility and dispersibility with biodegradable polymers, thereby significantly improving the mechanical properties of the biodegradable polymer composite.

### [Background Art]

Recently, interest in making reinforced composite materials (nanocomposite materials) has increased significantly worldwide due to the excellent physical properties of nano-sized materials. Currently, most studies use inorganic materials, such as nano clay and carbon nanotubes, and glucose-based compounds such as nanocellulose as reinforcing materials to make nanocomposites. In particular, cellulose is the most abundant polymer material available in nature and has many advantages such as excellent mechanical strength and biodegradability, so much attention is being paid to technology for using it as a filler for biodegradable polymers. In other words, if such cellulose is manufactured in a nano size and introduced into a biodegradable polymer to be complexed in nano units, it can not only enhance the mechanical properties of the composites but also replace microplastics, thereby reducing social/economic costs caused by the microplastics and creating a lot of industrial value.

However, according to reports studied so far, there are limitations to the use of technologies for dispersing glucose-based compounds to improve the mechanical properties of biodegradable polymers such as poly(butylene succinate) (PBS), polyglycolide (PGA), and polycaprolactone (PCL), due to the following problems:
First, the most commonly used method to produce nanocellulose, which is a representative example of glucose-based compounds, is to oxidize cellulose using TEMPO reagent. This method can nanoize the cellulose by changing the hydroxyl group (-OH) at the 6th position of glucose in the cellulose repeating unit to carboxylic acid (-COOH), and has the advantage of improving dispersibility. However, since the nanocellulose manufactured through TEMPO treatment has a negative charge and strong hydrophilicity, interfacial heterogeneity is prone to occur in the process of complexing with hydrophobic biodegradable polymers, whereby there is a problem in that dispersibility in the polymer matrix is rather reduced, and thus it is ineffective in imparting mechanical strength to the composite.

Secondly, in addition to the cellulose nanofibers using TEMPO described above, there was an attempt to manufacture a polymer composite having improved mechanical strength by dispersing cellulose nanocrystals (CMC) from which non-cellulose components (non-crystalline) were removed into biomolecular polymers, it requires a very complex and sophisticated manufacturing process and has a low yield, which limits its actual commercialization. In other words, the structure and physical properties of cellulose nanocrystals are determined depending on the species, but can change significantly depending on a concentration of acid used in the hydrolysis process, hydrolysis temperature, and time. For example, if the acid concentration is too high or the cellulose is heated for a long time, cellulose is completely decomposed into monosaccharide form, whereas if the acid concentration is too low or the hydrolysis is performed for a short time, all of the amorphous regions do not disappear, and a phenomenon occurs in which the fibers agglomerate with each other. In order to obtain pure cellulose nanocrystals as described above, there are difficulties in actual commercialization due to technical limitations and yield problems.

Thirdly, even if all of the above problems are overcome and cellulose nanocrystals are manufactured, a large number of hydroxyl groups are present on the surface of the cellulose nanocrystals prepared in this way, whereby they are fundamentally hydrophilic and thus have structurally poor compatibility with most hydrophobic polymers. Further, they have poor interfacial interaction with biodegradable polymers, making it difficult to evenly disperse them in nano sizes within the polymer matrix. As a result, the excellent physical properties of cellulose cannot be fully utilized in the polymer composites, making it difficult to increase mechanical properties as desired.

Fourthly, in order to compensate for the poor compatibility of cellulose nanocrystals with biodegradable polymers, attempts were made to modify the surface of cellulose nanocrystals, and as part of these efforts, a study was reported in which a biopolymer was introduced onto the surface of cellulose nanocrystals through a graft-from method using a tin catalyst. In this case, however, the polymerization conversion rate is too fast and the self-polymerization rate is high, so there is a problem in that the biopolymer cannot be properly grafted to the surface of cellulose nanocrystals. In particular, there is a problem in that a large amount of biopolymers that are not grafted onto the surface of cellulose nanocrystals are simultaneously produced, causing a significant decrease in the production yield of cellulose nanocrystals surface-modified with biopolymers.

Accordingly, in order to fully utilize the excellent mechanical properties of cellulose as a natural material and improve compatibility with and dispersibility in biodegradable polymer composites, there is an urgent need for research on

how to modify the surface of cellulose nanocrystals with high purity and to ultra-highly modify cellulose nanocrystals with biopolymers even under mild reaction conditions.

**[Prior Art Literature]**

**[Patent Documents]**

Korean Registered Patent Publication No. 1376712 (Publication Date: March 14, 2014)

**[Disclosure]**

**[Technical Problem]**

The present invention has been devised to overcome the above-mentioned problems, and the object of the invention is to provide a high-purity manufacturing method of a biopolymer-substituted glucose-based compound, which can significantly improve compatibility with and dispersibility in biodegradable polymers by ultra-highly modifying a surface of a glucose-based compound as a natural material with excellent mechanical properties, and a glucose-based compound with an ultra-highly substituted biopolymer manufactured through the method.

**[Technical Solution]**

In order to achieve the above-described object, the present invention provides a method of producing a biopolymer-substituted glucose-based compound, the method including: a first step of preparing a mixed solution by reacting a glucose-based compound, a biopolymer and a catalyst, and a second step of adding a solvent to the mixed solution and purifying it, wherein the compound has peaks at XRD 2 Theta values of 22.3±0.5 and 34.3±0.5.

In addition, according to one embodiment of the present invention, the catalyst in the first step may be triazabicyclodecene (TBD).

Further, the reaction in the first step may be performed at room temperature of 10 to 50°C.

Additionally, the solvent may include a first solvent and a second solvent, wherein the first solvent may be a solvent that dissolves a homo polymer among the biopolymers grown on the glucose-based compound in the first step, and the second solvent may be a solvent that allows only the biopolymer-substituted glucose-based compounds to be obtained by precipitating them.

In addition, the present invention provides a biopolymer-substituted glucose-based compound, which has peaks at XRD 2 Theta values of 22.3 ± 0.5 and 34.3 ± 0.5 and no peak at 32.8 ± 0.2, and has a degree of substitution (DS) of 2.5 or more according to Measurement Method 1 below:

[Measurement Method 1]

$$DS = \frac{Terminal\ lactyl\ units}{Anhydoglucos\ units}$$

In addition, according to one embodiment of the present invention, the compound may have H-NMR values of 5.50, 5.45 and 4.23.

Additionally, the glucose-based compound may be a cellulose-based compound derived from plants.

Further, the glucose-based compound may be a compound represented by Formula 1 below:

[Chemical Formula 1]

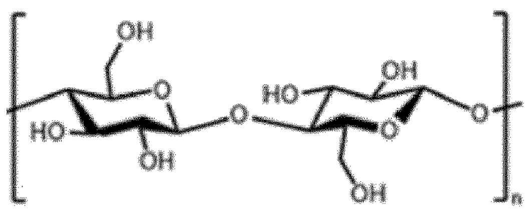

wherein n is an integer ranging from 10 to 35,000.

Additionally, the biopolymer may be a compound represented by Formula 2 below:

[Chemical Formula 2]

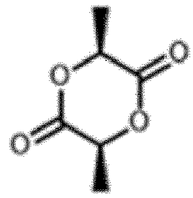

Additionally, the biopolymer-substituted glucose-based compound may be represented by Formula 3 below:

[Chemical Formula 3]

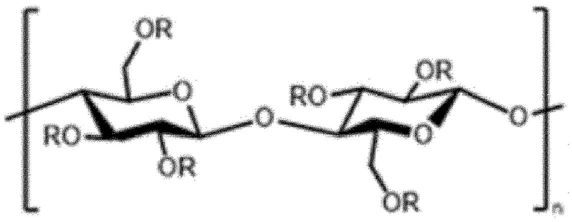

wherein n is an integer from 10 to 35,000, R is

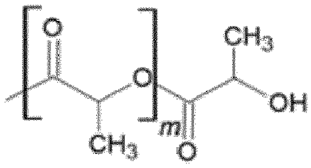

,

and m is an integer from 1 to 1000.

In addition, the present invention provides a biodegradable polymer composite in which the biopolymer-substituted glucose-based compounds as described above are dispersed in a biodegradable polymer matrix.

**[Advantageous Effects]**

The present invention can produce with high purity a biopolymer-substituted glucose-based compound having significantly improved compatibility with and dispersibility in a biodegradable polymer by ultra-highly modifying a surface of a glucose-based compound with a biopolymer under mild conditions in order to fully utilize an eco-friendly manufacturing technology, and excellent mechanical properties of a natural glucose-based compound as a highly functional new material.

In addition, by introducing such biopolymer-substituted glucose-based compound into a biodegradable polymer, excellent mechanical properties sufficient to replace microplastics can be secured, and the biodegradable polymer composite including the compound is also biodegradable. Therefore, it is possible to manufacture eco-friendly biodegradable polymer composites that have been difficult to commercialize, thereby fundamentally solving problems caused by microplastics and significantly reducing social and economic costs.

**[Description of Drawings]**

FIG. 1 is a graph showing the results of FT-IR analysis of a biopolymer-substituted glucose-based compound according to an embodiment of the present invention.

FIG. 2 is a graph showing differential scanning calorimeter (DSC) data of a biopolymer-substituted glucose-based compound according to an embodiment of the present invention.

FIGS. 3 and 4 are graphs showing the results of H-NMR analysis of glucose-based compounds substituted with biopolymers according to an example and a comparative example of the present invention, respectively.

FIGS. 5 and 6 are graph showing the results of XRD analysis of a biopolymer-substituted glucose-based compound according to an embodiment of the present invention.

**[Best Modes of the Invention]**

Hereinafter, embodiments of the present invention will be described in detail so as to be easily implemented by one of ordinary skill in the art to which the present invention pertains. The present invention may be embodied in a variety of forms and is not be limited to the embodiments described herein.

As described above, efforts to replace microplastics by improving the mechanical strength of conventional biodegradable polymer composites have limitations in practical use due to technological limitations on new materials, dispersibility in the polymer matrix, and difficult manufacturing conditions.

Accordingly, the present invention provides a method of producing a biopolymer-substituted glucose-based compound, the method including: a first step of preparing a mixed solution by reacting a glucose-based compound, a biopolymer and a catalyst, and a second step of purifying the mixed solution by adding a solvent thereto, wherein the compound has peaks at XRD 2 Theta values of 22.3±0.5 and 34.3±0.5.

Thereby, the present invention can produce with high purity a biopolymer-substituted glucose-based compound having significantly improved compatibility with and dispersibility in a biodegradable polymer by ultra-highly modifying a surface of a glucose-based compound with a biopolymer under mild conditions in order to fully utilize an eco-friendly manufacturing technology, and excellent mechanical properties of a glucose-based compound as a highly functional new natural material. In addition, by introducing such biopolymer-substituted glucose-based compound into a biodegradable polymer, excellent mechanical properties sufficient to replace microplastics can be secured, and the biodegradable polymer composite including the compound is also biodegradable. Therefore, it is possible to manufacture eco-friendly biodegradable polymer composites that have been difficult to commercialize, thereby fundamentally solving problems caused by microplastics and significantly reducing social and economic costs.

Hereinafter, a method of producing a biopolymer-substituted glucose-based compound according to the present invention will be described in detail.

Microplastics, which have recently become a major environmental problem, generally refer to plastic pieces with a size of 200 μm or less, and are created when plastic is worn out or broken into small pieces due to solar decomposition, etc. There is a high possibility that such microplastics will continue to accumulate in the body, and the side effects caused by them are not properly understood, making it difficult to accurately assess the risk. Therefore, the seriousness and danger of microplastics are already spreading socially.

As an alternative for reducing the social and economic costs caused by the microplastics, research is being conducted on bioplastic which are a combination of natural materials and polymers, i.e., biodegradable polymer materials that are eco-friendly and are naturally decomposed by microorganisms when landfilled and do not generate harmful gases even when incinerated.

Poly(butylene succinate) (PBS), polyglycolide (PGA), and polycaprolactone (PCL), which are representative biodegradable polymer materials, have poor mechanical properties, making it difficult to commercialize them. Therefore, in order to strengthen the mechanical properties of biodegradable polymer materials, a technology for dispersing biodegradable compounds in the biodegradable polymer materials has been introduced.

Accordingly, the present invention overcomes the above-mentioned problems by implementing a biopolymer-substituted glucose-based compound formed by the reaction of a biopolymer and a glucose-based compound which can be evenly dispersed in the biodegradable polymer material and significantly improve the mechanical properties.

That is, a method of producing the biopolymer-substituted glucose-based compound include a first step of preparing a mixed solution by reacting a glucose-based compound, a biopolymer and a catalyst.

The glucose-based compound may be derived from living organisms, and may be a conventional, eco-friendly glucose-based compound. For example, it may be one or more biodegradable compounds selected from the group consisting of nanocellulose, cellulose microcrystals, cellulose powder, fibrous cellulose, pulp, lignin, flax, ramie, hemp, etc., and preferably, may be a compound represented by Formula 1 below:

[Chemical Formula 1]

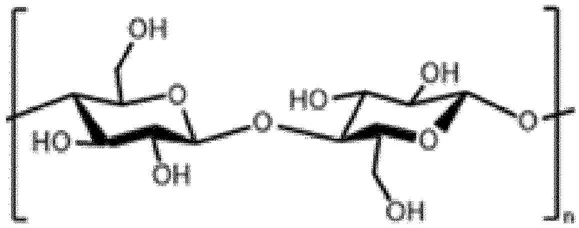

wherein n may be 10 to 35,000, more preferably 90 to 200, which may be advantageous in terms of compatibility with the polymer matrix.

In general, the cellulose is composed of a crystalline region and an amorphous region. When the cellulose reacts with acid and undergoes hydrolysis of the glycosidic bond, the amorphous region is removed therefrom, and the cellulose may have a crystalline region, that is, a form of a nanocrystal with a diameter of 2 to 20 nm. The compound represented by Formula 1 according to the present invention having the nanocrystal form has a property of enhancing mechanical properties of biodegradable polymers, and can significantly improve the mechanical properties of the biodegradable polymer materials even with large surface area and a low volume fraction.

The biopolymer may be a glucose-based compound, preferably a compound capable of modifying a surface of the compound represented by Formula 1 so that the compound represented by Formula 1 can be evenly dispersed in the biodegradable polymer. For example, it may be a polymer of a cyclic monomer including an ester group, most preferably a monomer represented by Formula 2 below:

[Chemical Formula 2]

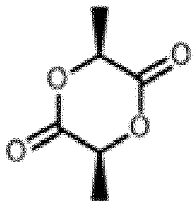

However, in the case of the glucose-based compounds expressed by Formula 1 above, since a large number of hydroxyl groups are present on the surface of the nanocrystals, they are fundamentally hydrophilic and thus have structurally poor compatibility with most hydrophobic polymers. Further, they have poor interfacial interaction with biodegradable polymers, making it difficult to evenly disperse them in nano sizes within the polymer matrix. As a result, there is a problem that the polymer composite cannot be fully utilized as a biodegradable polymer with improved mechanical properties.

To improve this, there may be used a method of substituting the glucose-based compound withe the biopolymer using a tin catalyst or the like. In this case, however, there is a problem that the polymerization conversion rate is too fast and the self-polymerization rate is high, so the substitution rate of the biopolymer for the glucose-based compound is significantly low.

Meanwhile, a representative technique for dispersing the biodegradable compounds in the biodegradable polymer materials is to oxidize cellulose using TEMPO reagent and disperse it in the biodegradable polymer materials. This technique can nanoize the cellulose by changing the hydroxyl group (-OH) at the 6th position of glucose in the cellulose repeating unit to carboxylic acid (-COOH), and has the advantage of improving dispersibility. However, since the nanocellulose manufactured through TEMPO treatment has a negative charge and strong hydrophilicity, interfacial heterogeneity is prone to occur in the process of complexing with hydrophobic biodegradable polymers, whereby there is a problem in that dispersibility in the polymer matrix is rather reduced, and thus it is ineffective in imparting mechanical strength to the composite.

Accordingly, according to the present invention, by using triazabicyclodecene (TBD) as a catalyst in the above first step, the conventional problems can be solved and the reaction can be performed under mild conditions at room temperature of 10 to 50°C.

In this case, the glucose-based compound and the biopolymer may be added and reacted at a weight ratio of 1:5 to 50 in the presence of the above-mentioned catalyst. In this case, if the weight ratio of the glucose-based compound and the biopolymer is less than 1:5, there may be a problem that the glucose-based compound is not sufficiently modified with

the biopolymer as desired. Meanwhile, if the weight ratio of the glucose-based compound and the biopolymer exceeds 1:50, there may be a problem that the biopolymer to be reacted is excessive and unreacted, thereby generating impurities.

Any known conventional method can be used, except that the catalytic reaction in the first step of modifying the surface of the glucose-based compound with the biopolymer in the presence of the above-described catalyst is performed at room temperature. For example, the glucose-based compound and biopolymer may first be dispersed in an appropriate solvent (DMSO, etc.) and then dried in vacuum. Afterwards, they may be dispersed in a solvent such as DMSO and stirred at 50 to 100°C for 0.5 to 2 hours. Thereafter, the temperature may be adjusted to a room temperature of 10 to 50°C, and a catalyst may be added and stirred for 1 to 24 hours. After being stirred, the resulting material can be obtained through precipitation and separation processes and then dried under vacuum conditions to produce the final biopolymer-substituted glucose-based compound.

As described above, according to the method for producing the biopolymer-substituted glucose-based compound according to the present invention as described above, the glucose-based compound and the biopolymer may be performed at room temperature of 10 to 50°C in the presence of the above-described catalyst. That is, since the surface modification catalytic reaction can be performed at room temperature, it can be greatly advantageous in terms of process efficiency and stability compared to conventional modification methods that reach a temperature of 130 to 180°C.

Next, the method of producing the biopolymer-substituted glucose-based compound according to the present invention includes a second step of adding a solvent to the mixed solution prepared in the first step and purify it to obtain the biopolymer-substituted glucose-based compound having peaks at XRD 2 Theta values($\theta$) of 22.3°±0.5° and 34.3°±0.5°.

In general, in order to compensate for the poor compatibility and dispersibility of glucose-based compounds with biodegradable polymers, attempts were made to modify the surface of the glucose-based compounds, and as part of these efforts, a study was reported in which a biopolymer was introduced onto the surface of the glucose-based compounds through a graft-from method using a tin catalyst. In this case, however, the polymerization conversion rate is too fast and the self-polymerization rate is high, so there is a problem in that the biopolymer cannot be properly grafted to the surface of the glucose-based compounds . In particular, there is a problem in that a large amount of biopolymers that are not grafted onto the surface are simultaneously produced, resulting in a significantly low production yield.

In particular, when the glucose-based compound represented by Formula 1 is modified with the biopolymer represented by Formula 2 according to a preferred embodiment of the present invention, a large amount of homopolymer may inevitably be polymerized through a ring-opening reaction. The large amount of homopolymers produced in this way can affect the biopolymer modification efficiency, and further, the homopolymers with uneven chain length act as foreign substances when added to the biodegradable polymer matrix, causing a decrease in strength. Therefore, the production of homopolymers is not desirable for the purpose of the present invention, which is to improve dispersibility with biodegradable polymers.

Accordingly, the present invention has solved the above-mentioned problem by allowing the surface of glucose-based compounds to be ultra-highly substituted with the biopolymers in high purity so that the glucose-based compound, preferably the compound represented by Formula 1, exhibits excellent dispersibility in biodegradable polymer materials.

To this end, the solvent may include a first solvent and a second solvent, wherein the first solvent may be a solvent that dissolves a homo polymer among the biopolymers grown on the glucose-based compound in the first step, and the second solvent may be a solvent that allows only the biopolymer-substituted glucose-based compounds to be obtained by precipitating them.

The first solvent is not particularly limited as any solvent capable of removing the homopolymers during the polymerization reaction of the biopolymer can be appropriately selected. However, when the biopolymer is a biopolymer represented by Formula 2 according to a preferred example of the present invention, for example, dichloromethane chloroform may be used as the first solvent.

Meanwhile, the second solvent is not particularly limited as any known conventional solvent capable of precipitating only the biopolymer-substituted glucose-based compounds can be used, which is suitable for the purpose of the present invention. As non-limiting examples thereof, at least one solvent or mixed solvent selected from the group consisting of methanol, hexane, heptane, pentane, toluene, ethanol, tetrahydrofuran, acetone, etc. may be used.

Afterwards, the final material can be obtained by performing a typical separation process. For example, the mixed solution of the first and second solvents may be repeatedly centrifuged until the homopolymer is completely removed, and after removing the supernatant, the precipitated mixture may be separated to produce the final biopolymer-substituted glucose-based compounds.

According to a preferred embodiment of the present invention, the biopolymer-substituted glucose-based compound may be a compound represented by Formula 3 below:

[Chemical Formula 3]

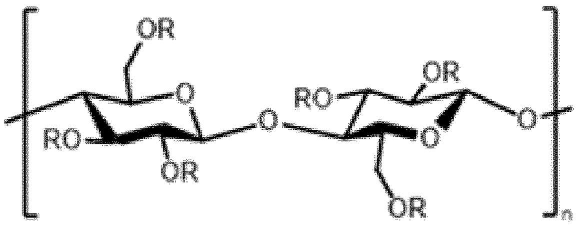

wherein n may be 10 to 35,000, more preferably 90 to 200, which may be advantageous in terms of compatibility with the polymer matrix.

In addition, in Formula 3, R may be

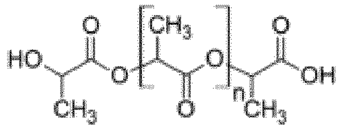

,

and n may be 1 to 1000, more preferably 1 to 100.

The compound of Formula 3 may be synthesized in the first step according to Scheme 1 below and then finally obtained through the second step.

[Chemical Scheme 1]

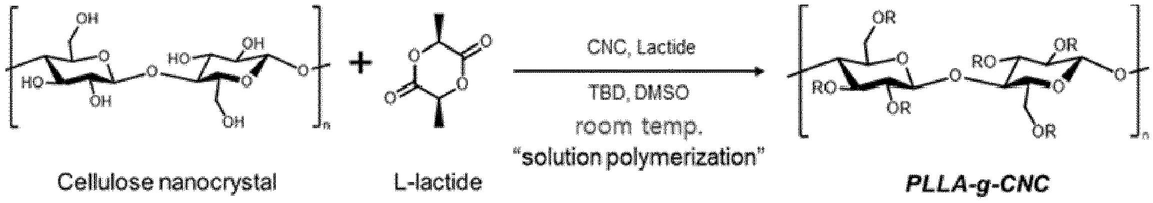


As described above, the biopolymer-substituted glucose-based compound represented by Formula 3 according to a preferred embodiment of the present invention can have significantly improved compatibility and dispersibility with the biodegradable polymer materials due to ultra-high substitution of the biopolymer.

More specifically, referring to FIG. 1, which is the result of FT-IR analysis of the biopolymer-substituted glucose-based compound represented by Formula 3, it can be seen that there is no separate carbonyl group in the structure of the compound represented by Formula 1 above, whereas in the case of the biopolymer-substituted glucose-based compound according to Formula 3, which is modified with the biopolymer represented by Formula 2, the stretching peak of the carboxyl group clearly appears at 1745 cm-1. From this, it can be qualitatively evaluated that the hydroxyl group on the surface of the biopolymer-substituted glucose-based compound represented by Formula 3 has been modified by the biopolymer represented by Formula 2.

Meanwhile, referring to FIG. 2, it shows the thermal behavior of the biopolymer-substituted glucose-based compound represented by Formula 3 according to a preferred embodiment of the present invention. That is, it can be seen that the Tg of commercial PLA is around 60°C, whereas the biopolymer-substituted glucose-based compound according to the present invention has a lower Tg of about 25°C. Through this, it can be seen that the hydroxyl group on the surface of the biopolymer-substituted glucose-based compound represented by Formula 3 has been modified with oligomer-level PLA.

Meanwhile, the biopolymer-substituted glucose-based compound according to the present invention may exhibit a degree of substitution (DS) of 2.5 or more, preferably 2.7 or more, according to Measurement Method 1 below:

[Measurement Method 1]

$$DS = \frac{Terminal\ lactyl\ units - Unreacted\ anhydroglucose\ hydoxyl\ units}{Terminal\ lactyl\ units} \times 3$$

$$= \frac{IA_{(b')}/3\ - IA_{(2'+3'+6')}/3}{IA_{(b')}/3} \times 3$$

In measurement method 1, IA is an integration area, 2' is a hydroxyl group derived from carbon 2 of the glucose-based compound, 3' is a hydroxyl group derived from carbon 3 of the glucose-based compound, and 6' is a hydroxyl group derived from carbon 6 of the glucose-based compound, b' is a hydrogen of the methyl group derived from the lactyl group at the end of the substituted PLA.

More specifically, referring to FIG. 3A, which is the result of H-NMR analysis of the biopolymer-substituted glucose-based compound represented by Formula 3 obtained by modifying the glucose-based compound represented by Formula 1 with the biopolymer represented by Formula 2 according to an embodiment of the present invention, it can be seen that in the case of the biopolymer-substituted glucose-based compound whose surface was modified according to the present invention, a characterization peak for Poly(l-(lactic acid)) (PLLA) due to the surface modification also appears in addition to the characterization peak appearing in the cellulose unit. Accordingly, by calculating the ratio of the number of repeating units of the characterization peak present in the cellulose unit and the PLLA peak, the number of surface-modified repeating units per cellulose unit (molar substitution of lactide, MS) can be obtained as shown in Equation 1 below.

[Equation 1]

$$MS = \frac{lactyl\ units}{anhydroglucose\ units} = DS \times DP$$

In addition, by using the integration ratio of the terminal peak of PLLA, a degree of substitution of PLLA (DS), which is the average number of chains of PLLA per cellulose unit, i.e., a value indicating how many of the three hydroxy groups in the cellulose unit have been converted to the PLLA, can be obtained as shown in Equation 2 below:

[Equation 2]

$$DS = \frac{Terminal\ lactyl\ units - Unreacted\ anhydroglucose\ hydoxyl\ units}{Terminal\ lactyl\ units} \times 3$$

$$= \frac{IA_{(b')}/3\ - IA_{(2'+3'+6')}/3}{IA_{(b')}/3} \times 3$$

wherein IA is an integration area, 2' is a hydroxyl group derived from carbon 2 of the glucose-based compound, 3' is a hydroxyl group derived from carbon 3 of the glucose-based compound, and 6' is a hydroxyl group derived from carbon 6 of the glucose-based compound, b' is a hydrogen of the methyl group derived from the lactyl group at the end of the substituted PLA.

By using the values obtained from Equations 1 and 2, the average degree of polymerization of PLLA (DP) can be obtained as shown in Equation 3 below:

[Equation 3]

$$DP = \frac{lactyl\ units}{Terminal\ lactyl\ units} = \frac{IA_{(b+b')}}{IA_{(b')}} = \frac{IA_{(b)}}{IA_{(b')}} + 1$$

wherein IA is an integration area, 2' is a hydroxyl group derived from carbon 2 of the glucose-based compound, 3' is a hydroxyl group derived from carbon 3 of the glucose-based compound, and 6' is a hydroxyl group derived from carbon 6 of the glucose-based compound, b is a hydrogen of the methyl group derived from the lactyl group in the substituted PLA repeating unit.

In addition, b' is a hydrogen of the methyl group derived from the lactyl group at the end of the substituted PLA.

That is, when the degree of PLLA conversion of the biopolymer-substituted glucose-based compound according to the present invention shown in FIG. 3 was calculated using the above method, the values of MS = 14.11, DS = 2.72, and DP = 5.19 were confirmed.

The biopolymer-substituted glucose-based compound prepared by the method of the present invention as described above may have peaks at XRD 2 Theta values of 22.3°±0.5° and 34.3°±0.5°, may not have a peak at 32.8°±0.2°, and may have H-NMR values of 5.50, 545, and 4.23.

Meanwhile, the present invention provides a biodegradable polymer composite in which the biopolymer-substituted glucose-based compounds as described above are dispersed in a biodegradable polymer matrix.

Here, the biodegradable polymer may be a compound derived from living organisms, and non-limiting examples thereof include poly(butylene succinate) (PBS), polyglycolide (PGA), polycaprolactone (PCL), etc., but are not limited thereto, and may be any conventional biodegradable polymer material that has excellent mechanical properties and is eco-friendly and thus can replace microplastics as long as it meets the purpose of the present invention.

Hereinafter, embodiments of the present invention will be described in detail so as to be easily implemented by one of ordinary skill in the art to which the present invention pertains. The present invention may be embodied in a variety of forms and is not be limited to the embodiments described herein.

## Example 1

0.5 g of cellulose nanocrystal (A&Poly Co., Ltd.) was vacuum-dried at 90°C for 24 hours, a three-necked glass flask was flamed with a torch, then 5 g of L-lactide (Sejin CI Co., Ltd.) and 20 ml of DMSO as a solvent were added thereto, which was stirred for 1 hour at 130°C under a nitrogen atmosphere using a magnetic stirrer. Afterwards, TBD as a catalyst, 3.4 wt% of monomer (0.17 g) were dissolved in 2 ml of DMSO and added, followed by reaction at 35°C for 3 hours.

Thereafter, the system was first dissolved in chloroform and precipitated using a first solvent of chloroform and a second solvent of hexane by a cosolvent method to obtain it, and this process was repeated five times. Then, using a spray drying technique, 1.2 g of the final high-purity glucose-based compound with ultrahigh substitution of the biopolymer, expressed as PLLA-g-CNC, was obtained.

## Example 2

A biopolymer-substituted glucose-based compound was prepared in the same manner as in Example 1, except that ε-caprolactone, rather than Chemical Formula 2, was used as the biopolymer in Example 1.

## Comparative Example 1

0.5 g of cellulose nanocrystal (A&Poly Co., Ltd.) was used as it is without being modified with a biopolymer (name: CNC).

## Experimental Example 1 - FT-IR analysis

FT-IR analysis was performed on the polymer (LC) prepared according to Example 1 and the compound according to Formula 1 (CNC), and the results are shown in FIG. 1.

Referring to FIG. 1, it can be seen that there is no separate carbonyl group in the structure of the compound represented by Formula 1 above, whereas in the case of the biopolymer-substituted glucose-based compound according to Formula 3, which is modified with the biopolymer represented by Formula 2, the stretching peak of the carboxyl group appears at 1745 cm-1. From this, it can be qualitatively evaluated that the hydroxyl group on the surface of the biopolymer-substituted glucose-based compound represented by Formula 3 has been modified by the biopolymer represented by

Formula 2.

**Experimental Example 2 - DSC analysis**

Differential scanning calorimeter (DSC) data was analyzed for the biopolymer-substituted glucose-based compound prepared according to Example 1, Comparative Example 1, and commercial PLA, and the results are shown in FIG. 2.

Referring to FIG. 2, it shows the thermal behavior of the biopolymer-substituted glucose-based compound represented by Chemical Formula 3 according to a preferred embodiment of the present invention. That is, it can be seen that the Tg of commercial PLA is around 60°C, whereas the biopolymer-substituted glucose-based compound according to the present invention has a Tg of about 25°C. Through this, it can be seen that the hydroxyl group on the surface of the biopolymer-substituted glucose-based compound represented by Formula 3 has been modified with PLA, and this temperature difference can be interpreted as being due to the molecular weight of PLA.

**Experimental Example 3 - H-NMR analysis (Example 1)**

H-NMR analysis was performed on the biopolymer-substituted glucose-based compound prepared according to Example 1, the results of which are shown in FIG. 3, and DS, DP, and MS values were derived through the following equations 1 to 3.

[Equation 1]

$$MS = \frac{lactyl\ units}{anhydroglucose\ units} = DS \times DP$$

By calculating the ratio of the number of repeating units of the characterization peak of the biopolymer-substituted glucose-based compound prepared according to Example 1 and the PLLA peak, the number of surface-modified repeating units per cellulose unit (molar substitution of lactide, MS) can be obtained as shown in Equation 1 above.

In addition, by using the integration ratio of the terminal peak of PLLA, a degree of substitution of PLLA (DS), which is the average number of chains of PLLA per cellulose unit, i.e., a value indicating how many of the three hydroxy groups in the cellulose unit have been converted to the PLLA, can be obtained as shown in Equation 2 below:

[Equation 2]

$$DS = \frac{Terminal\ lactyl\ units - Unreacted\ anhydroglucose\ hydoxyl\ units}{Terminal\ lactyl\ units} \times 3$$

$$= \frac{IA_{(b')}/3\ - IA_{(2'+3'+6')}/3}{IA_{(b')}/3} \times 3$$

By using the values obtained from Equations 1 and 2, the average degree of polymerization of PLLA (DP) can be obtained as shown in Equation 3 below: That is, when the degree of PLLA conversion of the biopolymer-substituted glucose-based compound according to the present invention shown in FIG. 3 was calculated using the above method, the values of MS = 14.11, DS = 2.72, and DP = 5.19 were confirmed.

[Equation 3]

$$DP = \frac{lactyl\ units}{Terminal\ lactyl\ units} = \frac{IA_{(b+b')}}{IA_{(b')}} = \frac{IA_{(b)}}{IA_{(b')}} + 1$$

The biopolymer-substituted glucose-based compound prepared by the method of the present invention as described above may have peaks at XRD 2 Theta values(θ) of 22.3°±0.2° and 34.3°±0.2°, may not have a peak at 32.8°±0.2°, and may have H-NMR values of 5.50, 5.45, and 4.23.

By calculating the ratio of the number of repeating units of the characterization peak present in the compound (CNC) according to Formula 1 and the PLLA peak, the number of surface-modified repeating units per cellulose unit (molar substitution of lactide, MS) can be obtained as shown in Equation 1 above.

**Experimental Example 4 - H-NMR analysis (Comparative Example 1)**

H-NMR analysis was performed on the CNC according to Comparative Example 1, and the results are shown in FIG. 4.

Referring to FIG. 4, it can be seen that unlike Example 1, there are no characterization peaks a, a', b, and b' of the PLA repeating unit in Comparative Example 1, and the peak of moisture ($H_2O$) is also significantly broad and large as compared to Example 1. That is, it can be seen that after modification with the biopolymer as in Example 1, the amount of moisture contained was reduced and the peak of moisture ($H_2O$) became sharp.

**Experimental Example 5 - XRD analysis**

XRD analysis was performed on Example 1 (PLLA-g-CNC), Example 2 (PCL-g-CNC), and Comparative Example (Neat CNC), and the results are shown in FIGS. 5 and 6, respectively.

Referring to FIGS. 5 and 6, it can be seen that there are peaks at XRD 2 Theta values of 22.3°±0.2° and 34.3°±0.2° and no peak at 32.8°±0.2°.

Accordingly, the present invention can produce with high purity the biopolymer-ultrahighly substituted glucose-based compound having significantly improved compatibility with and dispersibility in the biodegradable polymer by ultra-highly modifying a surface of a glucose-based compound with a biopolymer under mild conditions in order to fully utilize an eco-friendly manufacturing technology, and excellent mechanical properties of a natural glucose-based compound as a highly functional new material.

In addition, by introducing such biopolymer-substituted glucose-based compound into a biodegradable polymer, excellent mechanical properties sufficient to replace microplastics can be secured, and the biodegradable polymer composite including the compound is also biodegradable. Therefore, it is possible to manufacture eco-friendly biodegradable polymer composites that have been difficult to commercialize, thereby fundamentally solving problems caused by microplastics and significantly reducing social and economic costs.

## Claims

1. A method of producing a biopolymer-substituted glucose-based compound, the method including:

   a first step of preparing a mixed solution by reacting a glucose-based compound, a biopolymer and a catalyst; and
   a second step of adding a solvent to the mixed solution and purifying it,
   wherein the compound has peaks at XRD 2 Theta values(θ) of 22.3°±0.5° and 34.3°±0.5°.

2. The method of producing a biopolymer-substituted glucose-based compound according to claim 1, wherein the catalyst in the first step is triazabicyclodecene (TBD).

3. The method of producing a biopolymer-substituted glucose-based compound according to claim 1, wherein the reaction in the first step is performed at room temperature of 10 to 50°C.

4. The method of producing a biopolymer-substituted glucose-based compound according to claim 1, wherein the solvent includes a first solvent and a second solvent,

   wherein the first solvent is a solvent that dissolves a homo polymer among the biopolymers grown on the glucose-based compound in the first step, and
   the second solvent is a solvent that allows only the biopolymer-substituted glucose-based compounds to be obtained by precipitating them.

5. A biopolymer-substituted glucose-based compound, which has:

peaks at XRD 2 Theta values of 22.3°±0.5° and 34.3°±0.5°, and
a degree of substitution (DS) of 2.5 or more according to Measurement Method 1 below:

[Measurement Method 1]

$$DS = \frac{Terminal\ lactyl\ units - Unreacted\ anhydroglucose\ hydoxyl\ units}{Terminal\ lactyl\ units} \times 3$$

6. The biopolymer-substituted glucose-based compound according to claim 5, which has H-NMR values of 5.50, 5.45 and 4.23.

7. The biopolymer-substituted glucose-based compound according to claim 5, wherein the glucose-based compound is a cellulose-based compound derived from plants.

8. The biopolymer-substituted glucose-based compound according to claim 5, wherein the glucose-based compound is a compound represented by Formula 1 below:

[Chemical Formula 1]

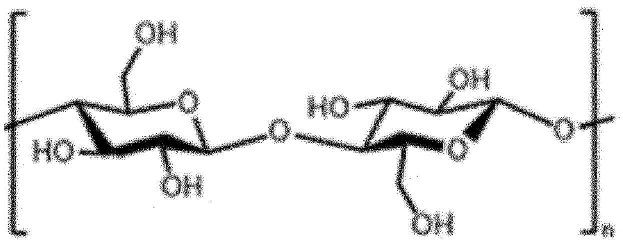

wherein n is an integer ranging from 10 to 35,000.

9. The biopolymer-substituted glucose-based compound according to claim 5, wherein the biopolymer is a compound represented by Formula 2 below:

[Chemical Formula 2]

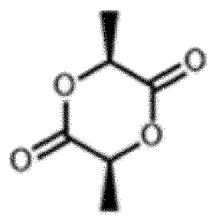

10. The biopolymer-substituted glucose-based compound according to claim 5, wherein the biopolymer-substituted glucose-based compound is represented by Formula 3 below:

[Chemical Formula 3]

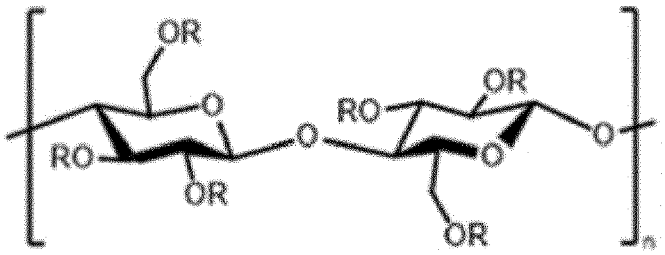

wherein n is an integer from 10 to 35,000, R is

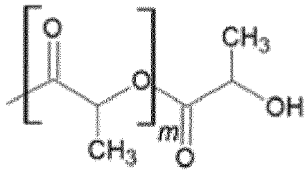

,

and m is an integer from 1 to 1000.

11. A biodegradable polymer composite in which a biopolymer-substituted glucose-based compound according to any one of claims 5 to 10 is dispersed in a biodegradable polymer matrix.

[Figure 1]

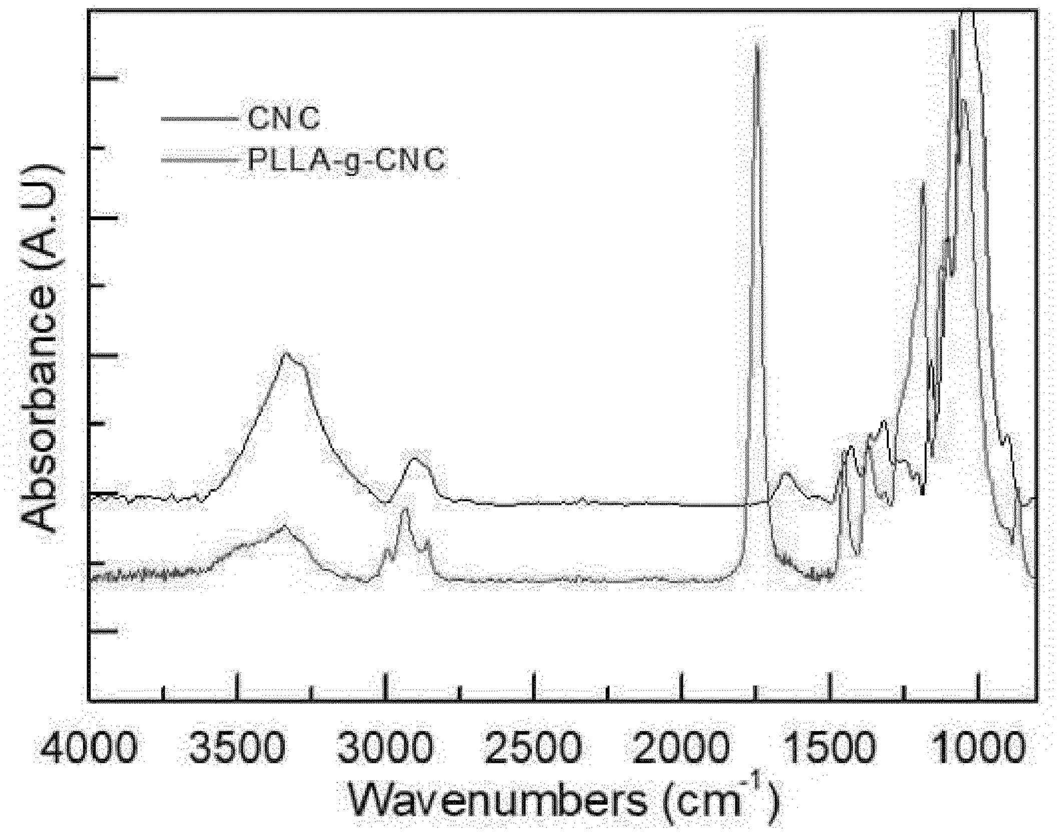
CNC
PLLA-g-CNC
Absorbance (A.U)
4000
3500
3000
2500
2000
1500
1000
Wavenumbers ($cm^{-1}$)

[Figure 2]

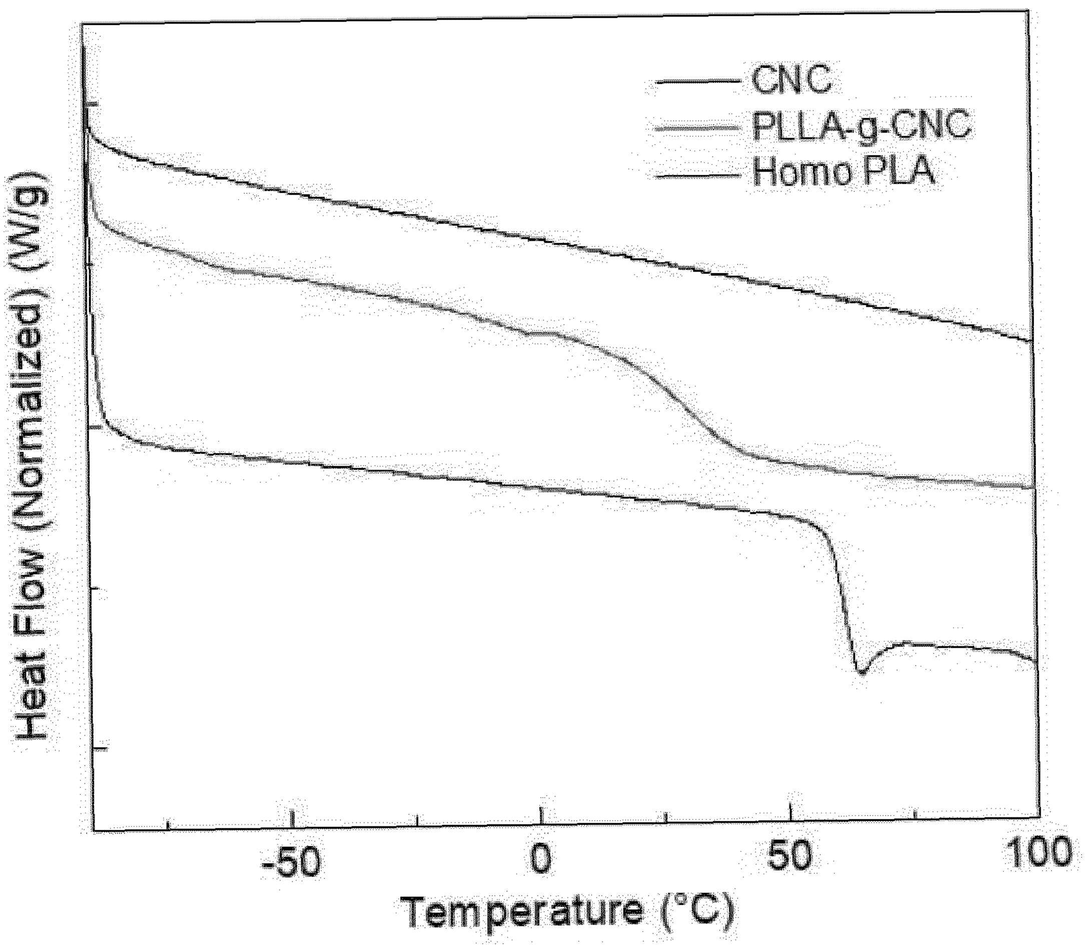
CNC
PLLA-g-CNC
Homo PLA
Heat Flow (Normalized) (W/g)
-50
0
50
100
Temperature (°C)

[Figure 3]

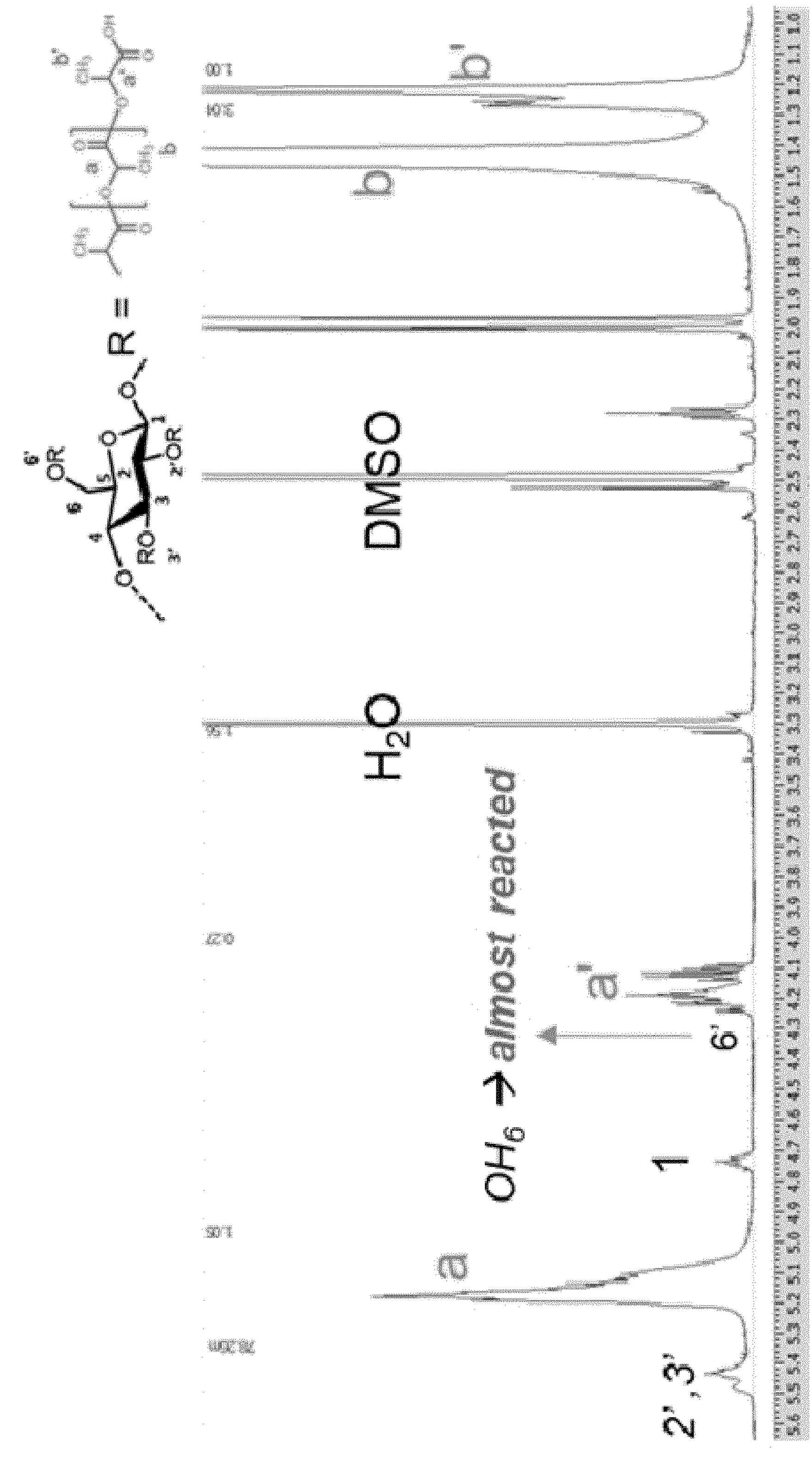

[Figure 4]

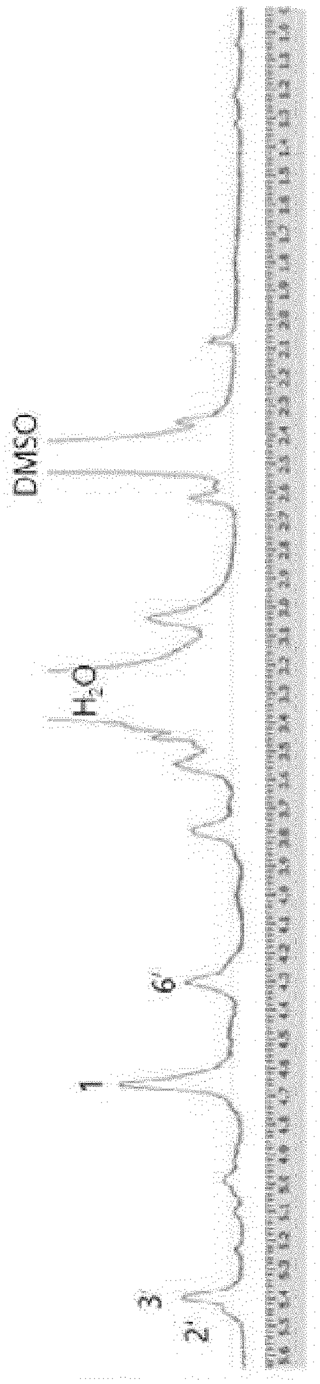

[Figure 5]

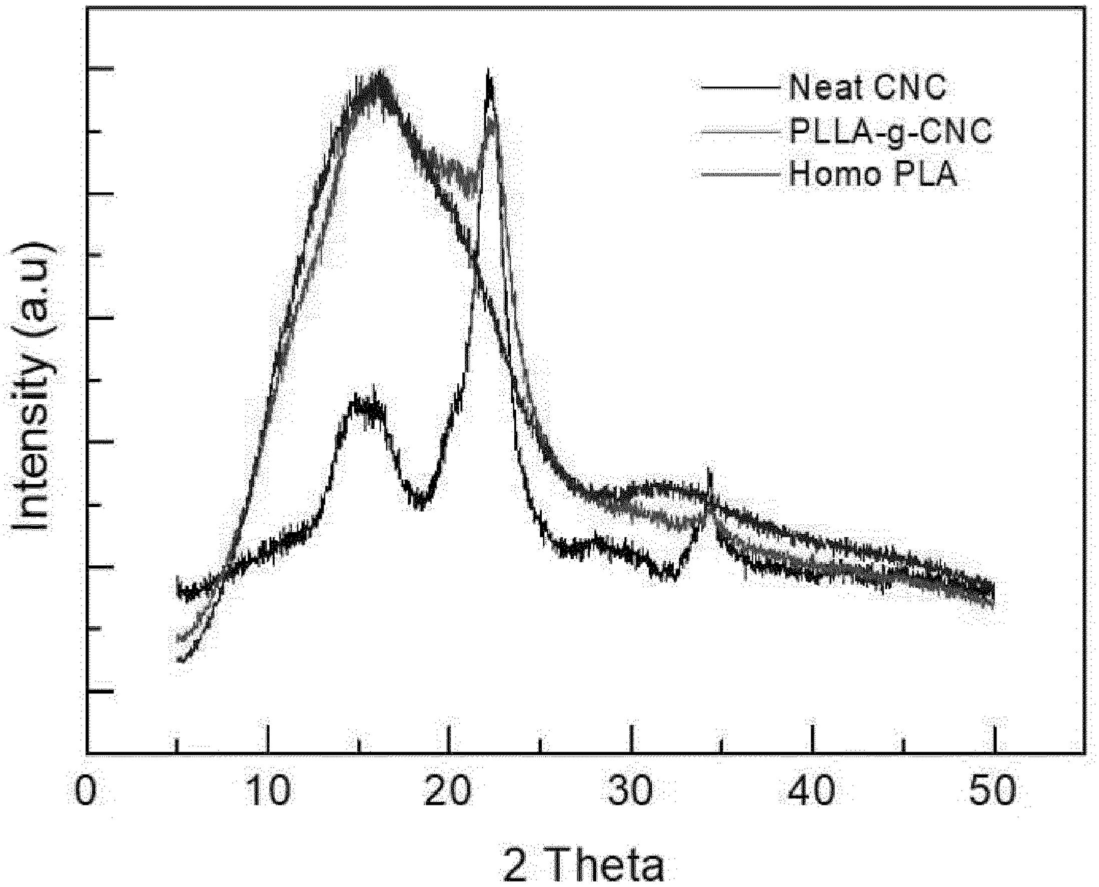
Neat CNC
PLLA-g-CNC
Homo PLA
Intensity (a.u)
0
10
20
30
40
50
2 Theta

[Figure 6]

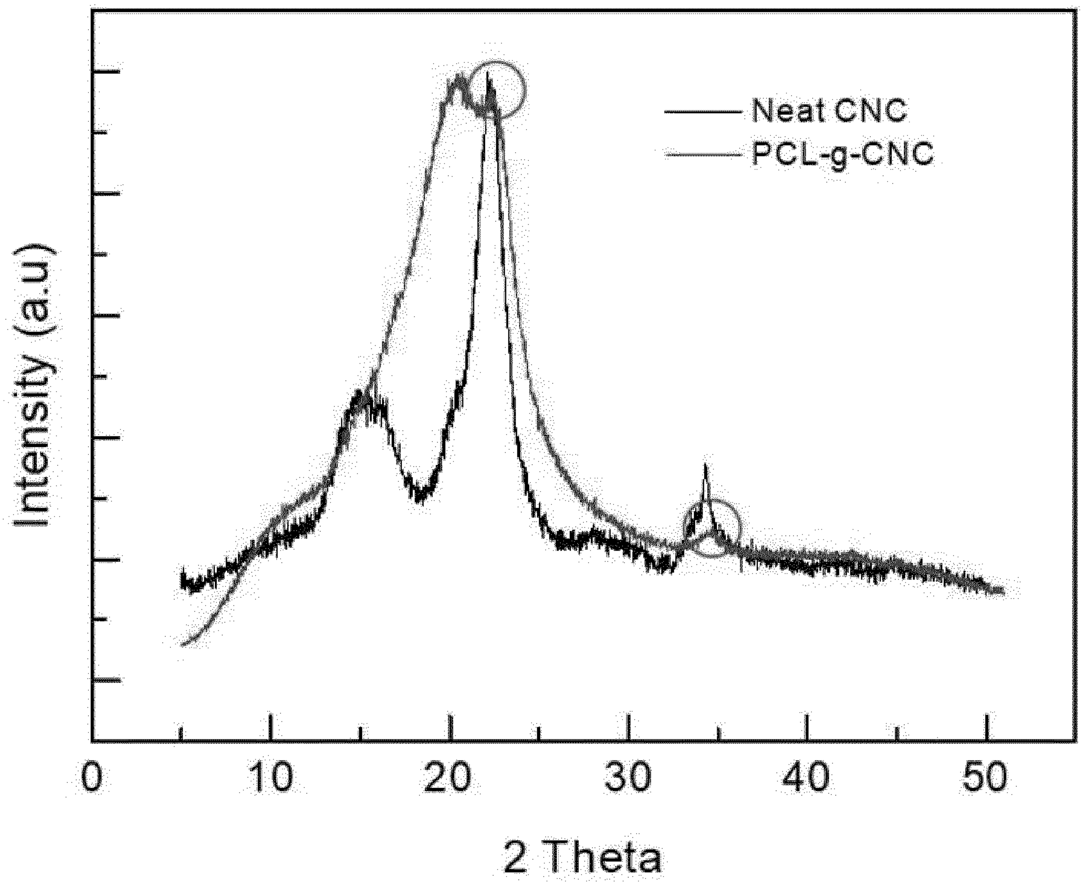

Europäisches Patentamt
European Patent Office
Office européen des brevets

# EUROPEAN SEARCH REPORT

Application Number
EP 23 19 9352

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br><br><br><br><br><br><br><br>Y | DE PAULA EVERTON LUIZ ET AL: "Effect of surface-grafted cellulose nanocrystals on the thermal and mechanical properties of PLLA based nanocomposites", EUROPEAN POLYMER JOURNAL, PERGAMON PRESS LTD OXFORD, GB, vol. 84, 12 September 2016 (2016-09-12), pages 173-187, XP029832410, ISSN: 0014-3057, DOI: 10.1016/J.EURPOLYMJ.2016.09.019<br>* abstract; paragraphs 2.2.2, 2.2.3, 3.1.2, 3.1.5; figure 5 *<br>----- | 1-11<br><br><br><br><br><br><br><br><br><br>2 | INV.<br>C08B3/02<br>C08B3/10<br>C08L1/10 |
| X<br><br><br><br><br><br><br><br><br><br>Y | LIZUNDIA ERLANTZ ET AL: "PLLA-grafted cellulose nanocrystals: Role of the CNC content and grafting on the PLA bionanocomposite film properties", CARBOHYDRATE POLYMERS, APPLIED SCIENCE PUBLISHERS , LTD BARKING, GB, vol. 142, 21 January 2016 (2016-01-21), pages 105-113, XP029433063, ISSN: 0144-8617, DOI: 10.1016/J.CARBPOL.2016.01.041<br>* abstract; paragraphs 2.2 and 3..2.4; figure 5 *<br>-----<br>-/-- | 1-11<br><br><br><br><br><br><br><br><br><br>2 | TECHNICAL FIELDS SEARCHED (IPC)<br>C08B<br>C08L |

The present search report has been drawn up for all claims

1

| Place of search | Date of completion of the search | Examiner |
|---|---|---|
| Munich | 20 February 2024 | Pellegrini, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 23 19 9352

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Russell C Pratt ET AL: "Triazabicyclodecene: a simple bifunctional organocatalyst for acyl transfer and ring-opening polymerization of cyclic esters", Journal of the American Chemical Society, 12 April 2006 (2006-04-12), pages 4556-4557, XP055325392, United States DOI: 10.1021/ja060662+ Retrieved from the Internet: URL:http://pubs.acs.org/doi/pdf/10.1021/ja060662+ * page 4556, col.2, para.2 * ----- | 2 | |
| | | | TECHNICAL FIELDS SEARCHED (IPC) |

1

The present search report has been drawn up for all claims

| Place of search | Date of completion of the search | Examiner |
|---|---|---|
| Munich | 20 February 2024 | Pellegrini, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1376712